# EUROPEAN PATENT SPECIFICATION

(11) **EP 4 411 704 B1**
(45) Date of publication and mention of the grant of the patent: **18.11.2026**
(21) Application number: 23170397.6
(22) Date of filing: 27.04.2023
(51) Int. Cl.: G09G 3/00, G09G 5/38

(54) **DISPLAY DEVICE AND CONTROL METHOD THEREOF**
ANZEIGEVORRICHTUNG UND STEUERUNGSVERFAHREN DAFÜR
DISPOSITIF D'AFFICHAGE ET SON PROCÉDÉ DE COMMANDE

(30) Priority: 06.02.2023 KR 20230015570
(43) Date of publication of application: 07.08.2024
(73) Proprietor: Hyundai Mobis Co., Ltd., Gangnam-gu Seoul 06141 (KR)
(72) Inventor: LEE, Jung Young, 16875 Yongin-si, Gyeonggi-do (KR)
(74) Representative: Frenkel, Matthias Alexander

(56) References cited:
- KR-A- 20210 144 400
- US-A1- 2018 010 905
- US-A1- 2019 166 328
- US-A1- 2022 172 656

## Description

### CROSS-REFERENCE TO RELATED APPLICATIONS

This application claims the benefit of earlier filing dates and right of priority to Korean Application No. 10-2023-0015570, filed on February 6, 2023.

### TECHNICAL FIELD

The present embodiments relate to a display device and a control method therefor and, more particularly, to a device and method in which a display is movable according to the type of information displayed and an output region of a screen is controlled.

### BACKGROUND

A display device may be used for numerous devices as a device capable of displaying various visual information on a display. In particular, a center fascia display of a vehicle displays various visual information about the vehicle. A display device in a vehicle may be installed in a dashboard of the vehicle placed in front of a driver seat and a passenger seat and display various convenient information, such as navigation, vehicle management, manipulation, Internet, and entertainment information.

Such a display used in a vehicle is increasing in size as the amount of information demanded by a user or displayed increases. However, as the size of the display increases, the display blocks the driver's view. In addition, the increased size of the display may cause inconvenience depending on the category of content displayed on a screen or cause unnecessary power loss because content is output on the entire screen.

KR 2021 0144400 A discloses a gate driving circuit of a display capable of freely adjusting an active region in which an image is displayed in a screen and independently controlling a frame frequency between the active regions, and a display device using the same. Specifically, the display includes a rollable display and rollers on which the display can be wound. A control signal indicating a start line position and an end line position of the active region is generated based on panel displacement information of the display obtained based on the number of rotations of the motor configured to rotate the display.

US 2019/166328 A1 describes an audio-visual system which provides various content output modes. The processor may control the audio-visual system 1000 to operate in a first mode for outputting a media art content while the display is stored in the housing in response to a first event, operate in a second mode for outputting an audio content through the speaker while a part of the display is exposed to the outside through the upper end of the housing in response a second event, and operate in a third mode for outputting a visual content while the entire display is exposed to the outside through the upper end of the housing in response a third event.

US 2022/172656 A1 describes a rollable display apparatus including a flexible display device, in which a sensing operation to compensate for the deterioration of the sub-pixel is performed in consideration of whether the display panel moves and an exposed area of the display panel. The apparatus includes a sensor mounted on a top of a rear face of the support panel coupled to the display panel. The sensor is configured to sense a distance from a location of the sensor to the top surface of the housing. The apparatus further includes a timing controller configured to identify whether the display panel moves based on the distance measured by the sensor.

### SUMMARY

An object of embodiments of the present disclosure is to provide a display device that varies an exposure region of a display.

Another object of embodiments of the present disclosure is to provide a method of controlling a screen for an exposure region of a display.

The objects to be achieved by the present disclosure are not limited to what has been particularly described hereinabove and other objects not described herein will be more clearly understood by persons skilled in the art from the following detailed description.

To achieve these objects and other advantages and in accordance with the purpose of the disclosure, as embodied and broadly described herein, a display device and a method of controlling a display device according to the present invention are set forth in the independent claims. The display device includes a casing having an opening, a display unit configured to be inserted into or withdrawn from the casing through the opening, a display mover connected to the display unit and configured to move the display unit, and a controller configured to transfer a signal to the display mover and the display unit. The display unit moves according to a mode so that an area exposed to an outside of the casing differs according to the mode.

The display unit may include a display driver configured to control a plurality of horizontal pixel lines included in a display, the controller may transfer a screen control signal to the display driver, and the display driver may control image output of the horizontal pixel lines based on the screen control signal.

The screen control signal may include an active period and an inactive period, the display driver may apply a voltage to a horizontal pixel line based on the screen control signal of an active state, and a starting point and a duration of the active period differ according to the mode.

The active period or the inactive period of the screen control signal may be based on a synchronization signal, and the synchronization signal may be a signal indicating an order of image data.

The active period of the screen control signal may be started based on the synchronization signal. The duration of the active period of the screen control signal may differ to the mode. The duration of the active period of the screen control signal may be calculated based on a scan rate

The active period and the inactive period of the screen control signal may be repeated over time, and the active period may be calculated based on a scan rate, n, represented in Hertz.

The screen control signal may have a different ratio of the duration of the active period to a duration of the inactive period in one cycle according to the mode. The duration of the inactive period of the screen control signal may be less than eight times the duration of the active period of the screen control signal.

All or part of a plurality of horizontal pixel lines may be activated according to the mode. The number of horizontal pixel lines deactivated may be less than eight times the number of horizontal pixel lines activated.

In another aspect of the present disclosure, a method of controlling a display device includes receiving a mode signal of a user by a controller, transmitting a movement control signal corresponding to the mode signal to a display mover by the controller, and transmitting a screen control signal corresponding to the mode signal to a display unit by the controller.

The screen control signal may include an active period and an inactive period, and the active period or the inactive period may be based on a synchronization signal indicating an order of image data.

The method includes moving the display unit based on the movement control signal by the display mover. The moving the display unit includes determining a position of the display unit based on a value measured by a sensor, driving a motor based on the movement control signal, and determining whether the display unit is moved according to the movement control signal based on the value measured by the sensor.

According to any one of embodiments of the present disclosure, a variety of modes for a display may be selected, thereby increasing the utilization of a display device.

In addition, according to any one of embodiments of the present disclosure, the exposure range of a display is configured for each mode and content is displayed in an exposed screen region, thereby improving the visibility of information.

In addition, according to any one of embodiments of the present disclosure, unnecessary power loss in a display region that is not exposed may be reduced.

The effects that are achievable by the present disclosure are not limited to what has been particularly described hereinabove and other advantages not described herein will be more clearly understood by persons skilled in the art from the following description.

### BRIEF DESCRIPTION OF DRAWINGS

FIGS. 1A-1C illustrate a display device according to a mode according to an embodiment of the present disclosure.
FIG. 2 illustrates a display device according to a mode according to an embodiment of the present disclosure.
FIG. 3 conceptually illustrates components of a display device according to an embodiment of the present disclosure.
FIGS. 4A-4B illustrate an active region and an inactive region of a display according to an embodiment of the present disclosure.
FIG. 5 illustrates an exemplary screen control signal according to an embodiment of the present disclosure.
FIGS. 6A-6C illustrate an exemplary screen control signal according to an embodiment of the present disclosure.
FIG. 7 illustrates an exemplary screen control signal according to an embodiment of the present disclosure.

### DETAILED DESCRIPTION

Advantages and features of the present disclosure and methods to achieve the same will be apparent from the following detailed description of embodiments taken in conjunction with the accompanying drawings. The present disclosure may, however, be exemplified in many different ways and should not be construed as being limited to the examples disclosed herein. Rather, these examples are provided so that this disclosure will be through and complete, and will fully convey the concepts of the present disclosure to those of ordinary skill in the art, and the present disclosure is only defined by the accompanying claims and equivalents thereto.

The terms used in the present specification are used in order to describe embodiments, but are not intended to limit the scope of the present disclosure. As used in the present specification, a singular form may also include a plural form, unless otherwise defined contextually. Moreover, "comprise" and/or "comprising" does not exclude the presence of one or more of other elements. Like numbers refer to like elements throughout the specification. As used herein, the term "and/or" includes any and all combinations of one or more of the associated listed elements. In the present specification, terms such as "first" or "second" are used in order to describe a variety of elements, but it is apparent that such elements should not be limited to the scope of terms. The terms are used solely for the purpose of distinguishing one element from another. Accordingly, it is apparent that a first element mentioned hereinbelow could be termed a second element, without departing from the scope of the present disclosure.

Unless otherwise defined, all terms (including technical and scientific terms) used herein have the same meaning as commonly understood by one of ordinary skill in the art to which the present disclosure belongs. Terms, such as those defined in commonly used dictionaries, are not to be interpreted in an idealized or overly formal sense unless expressly so defined herein.

Spatially relative terms, such as "below," "beneath," "lower," "above", "upper," and the like, may be used herein to easily describe the correlation between one element and another element as illustrated in the figures. The spatially relative terms should be understood as encompassing different orientations of elements in additional usage or operation of the orientations illustrated in figures. For example, when an element illustrated in the figures is turned over, the element described as disposed "below" or "beneath" another element may be disposed "above" the other element. Accordingly, the exemplary term "below" or "beneath" may encompass orientations of both below and above. The element may be oriented in other orientations, and the spatially relative terms used herein may be interpreted accordingly.

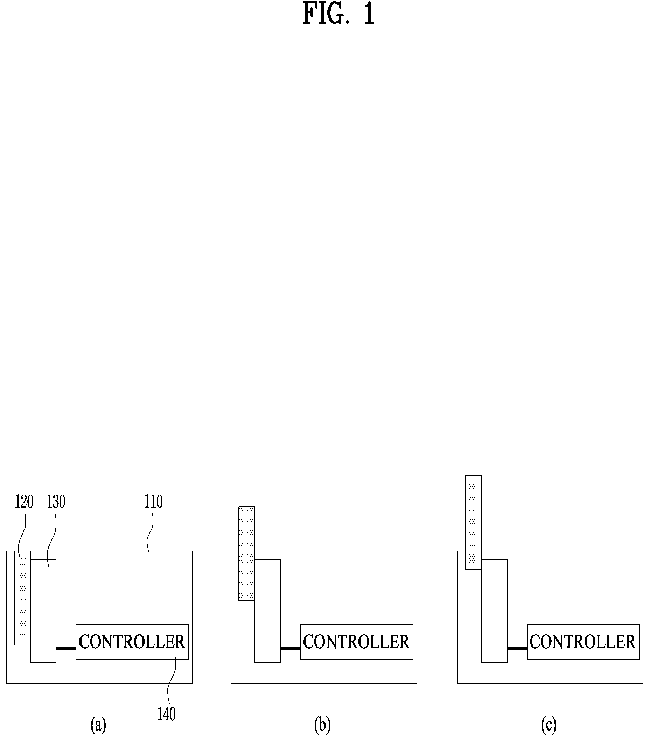

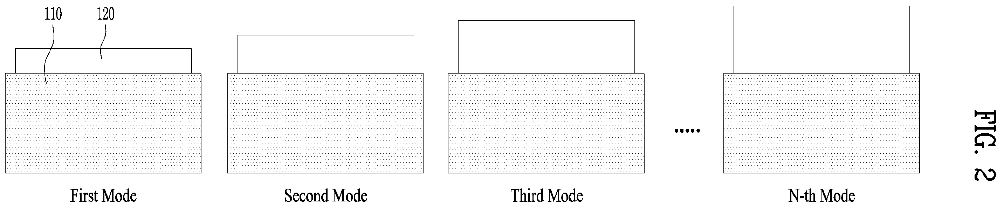

FIGS. 1A-1C and 2 illustrate a display device in accordance with an embodiment of the present disclosure (referred to hereinafter as a "display device") according to a mode.

FIGS. 1A-1C illustrate the interior of a display device 100 viewed from the side of the display device 100. In FIGS. 1A-1C, components that the display device 100 contains are illustrated so that the display device 100 may control a movement range of a display unit 120 according to a withdrawal mode. The components of the figure are illustrated in a schematic configuration to aid in understanding the embodiment of the present disclosure. The display unit 120 is configured to be externally withdrawn from a casing 110 via an opening of the casing 110 or be internally inserted into the casing 110. The display unit 120 may output various information on a screen thereof and may include a combination of various parts related to output of information. A left direction of the figure is a front direction in which the screen of the display unit 120 is shown.

FIG. 2 illustrates an outer appearance of the display device 100 viewed from the front of the display device 100. A withdrawn degree of the display unit 120 differs according to a withdrawal mode.

Referring to FIGS. 1A-1C and 2, the display device 100 includes the casing 110, the display unit 120, a display mover 130, and a controller 140.

The casing 110 provides a storage space of an appropriate size and shape so that other components of the display device 100 may be located therein. In addition, the casing 110 is provided with an opening, and the opening is a passage through which the display unit 120 passes inside and outside of the casing 110.

The display unit 120 includes a display that outputs image data on the screen. The display unit 120 may be a module including the display, such as a liquid crystal display (LCD), a light emitting diode (LED), an organic light emitting diode (OLED), or a plastic OLED (POLED). The display unit 120 is configured to be externally withdrawn from the casing 110 or internally inserted into the casing 110, through the opening of the casing 110. The withdrawal degree of the display unit 120 may vary depending on the withdrawal mode. Therefore, the area of the display unit 120 exposed to the exterior of the casing 110 differs according to the withdrawal mode. That is, the size of the screen shown to a user may be different according to the withdrawal mode.

For example, in a first mode, a part of the screen of the display unit 120 may be pulled out from the casing 110, and in the case of an N-th mode, the entire screen of the display unit 120 may be pulled out from the casing 110. The number of withdrawal modes and the exposure range of the display unit 120 corresponding to each withdrawal mode may be appropriately designed by those skilled in the art.

The display device 100 may effectively utilize the display unit 120 by properly withdrawing the display unit 120 by selection of the user. If the amount of information displayed on the screen is small, the display device 100 may partially withdraw the display unit 120, and if the amount of information displayed on the screen in large, for example, if navigation, gaming, etc., are displayed on the screen, the display device 100 may entirely withdraw the display unit 120. Since the display unit 120 may be withdrawn in consideration of the amount or use of information displayed in the display unit 120, the display device 100 may improve user convenience. In addition, the display device 100 may reduce power consumption by outputting information only in a region of the withdrawn screen of the display unit 120.

The display mover 130 is connected to the display unit 120 to move the display unit 120. The display mover 130 may detect the movement of the display unit 120 by a motor (not shown), a gear assembly (not shown), and a sensor and move the display unit 120 to an appropriate position according to the mode.

The motor and the gear assembly transfer the power of the motor to move the display unit 120. The gear assembly may represent an assembly structure of various gears (a worm gear, a worm wheel, a spur gear, a rack gear, etc.) connected to the motor. The motor and the gear assembly may be connected to the display unit 120 to slide the display unit 120 in a straight direction. As illustrated in FIGS. 1A-1C and 2, the display unit 120 may move straight in an upper and lower direction by the operation of the display mover 130. Various connection schemes may be applied to a connection structure between the motor and the gear and to a connection structure between the motor, the gear, and the display unit 120 by those skilled in the art.

The display mover 130 according to the embodiment may move the display unit 120 in a manner different from the scheme illustrated in FIGS. 1A-1C. For example, if the display unit 120 is a flexible type, the display mover 130 may be composed of a motor, a gear assembly, and a rotating drum to wind the display unit 120 on the outer circumferential surface of the rotating drum. Thus, the display mover 130 may drive the rotating drum to insert or withdraw the display unit 120 into or from the interior of the casing 10. Alternatively, when the display unit 120 is a foldable type, the display mover 130 may be driven by folding or spreading the display unit 120 according to the mode.

The sensor is configured to measure the distance between the display unit 120 and an inner wall of the casing 110. The sensor may include a known sensor such as an ultrasound sensor, an infrared sensor, a lidar sensor, a radar sensor, or a camera sensor.

In an example, which does not form part of the present invention but contains information useful for understanding the present invention, the sensor may be connected to one point of the display unit 120 and measure the distance to one point of the inner wall of the casing 110 by generating a signal in a direction parallel to a moving direction of the display unit 120. For example, in FIGS. 1A-1C, the sensor may be connected to a lower end of the display unit 120 and measure a distance D1 to the inner wall of the lower part of the casing 110 parallel to the moving direction (vertical direction) of the display unit 120.

When the display unit 120 moves up and down, since the value of the distance D1 measured by a sensor changes, the movement of the display unit 120 is controlled using the value measured by the sensor. For example, the controller (or head unit) 140 of a vehicle may control the withdrawal range of the display unit 120 by controlling the display mover 130 according to the sensor measurement value based on a withdrawal mode signal according to selection of the user.

In an example, which does not form part of the present invention but contains information useful for understanding the present invention, the sensor may be connected to the inner wall of the casing 110 and measure the distance to one point of the display unit 120 in a direction parallel to a movement direction of the display unit 120. For example, the sensor is connected to the inner wall of the lower part of the casing 110 and measures the distance D1 to one point of a lower end of the display unit 120 in a vertical direction, which is the movement direction of the display unit 120. Therefore, the value measured by the sensor differs according to the upper and lower movement of the display unit 120, and the movement of the display unit 120 may be controlled based on the value measured by the sensor.

Multiple withdrawal modes may correspond to measurement value sections of the sensor. For example, a sensor measurement value of 0 mm to 50 mm may correspond to a first mode, a sensor measurement value of 50 mm to 100 mm may correspond to a second mode, a sensor measurement value of 100 mm to 150 mm may correspond to a third mode, and a sensor measurement value of 150 mm to 200 mm may correspond to a fourth mode. Therefore, if a sensor measurement value is 120 mm, the withdrawal mode of the display unit 120 may be confirmed to be the third mode. The number of withdrawal modes and the sections of the measurement values corresponding to the withdrawal modes according to the embodiment may be arbitrarily set by those skilled in the art.

In an embodiment according to the present invention, the sensor is connected to the rear surface of the display unit 120 and measures a distance in a direction perpendicular to the movement direction (upper and lower direction in the figure) of the display 120. That is, the sensor is configured to measure a distance D2 to the inner wall of the casing 110 in a direction perpendicular to the rear surface of the display unit 120. In this case, the inner wall of the casing 110 is provided with a shape to gradually change the value of D2 measured according to the movement of the display unit 120. The distance D2 represents a horizontal distance between the sensor located at the rear surface of the display unit 120 and the inner wall of the back of the casing 110.

In another embodiment according to the present invention, the sensor is located at the inner wall of the back of the casing 110 and measures a distance in a direction perpendicular to the movement direction (upper and lower direction in the figure) of the display 120. That is, the sensor is configured to measure the distance D2 to the inner wall of the back of the casing 110. In this case, the rear surface of the display unit 120 is provided with a shape to gradually change the value of D2 measured according to the movement of the display unit 120.

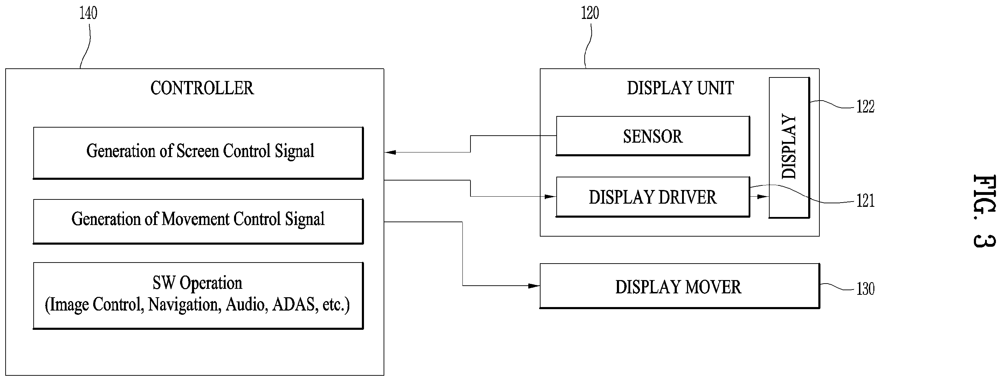

FIG. 3 conceptually illustrates components of the display device 100. In FIG. 3, signal transfer between the controller 140, the display unit 120, and the display mover 130 is illustrated.

The controller 140 of the display device 100 transfers a signal to the display unit 120 and the display mover 130. Specifically, the controller 140 may receive a mode signal selected by the user and transfer a movement control signal corresponding to the mode signal to the display mover 130. The controller 140 is configured to transfer a screen control signal corresponding to the mode signal to the display unit 120.

The display mover 130 is configured to move the display unit 120 according to a mode based on the movement control signal received from the controller 140.

The display unit 120 may control an image output region of the display unit 120 based on the screen control signal transferred by the controller 140.

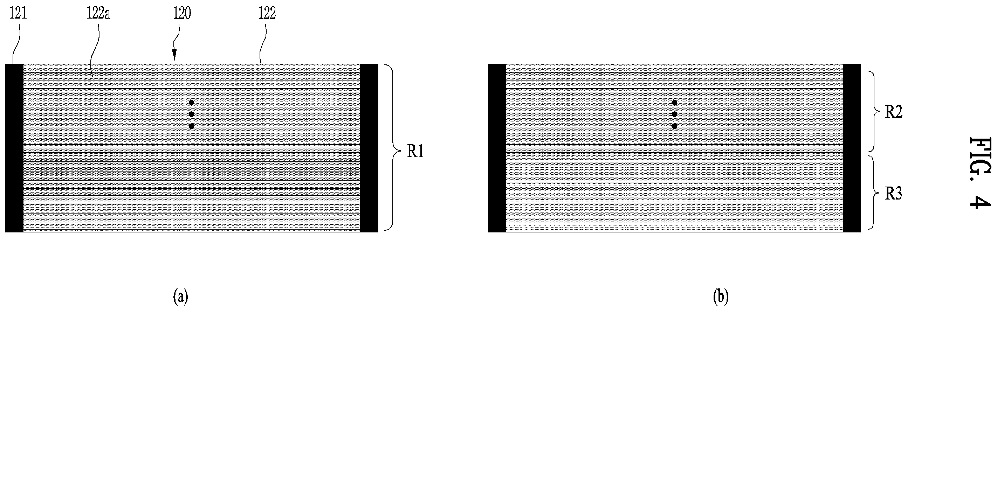

Referring to FIG. 3, the display unit 120 may include a display 122 and a display driver 121. FIG. 4 illustrates an active region and an inactive region of the display 122.

The display 122 is composed of pixels, and the pixels are arranged horizontally or vertically to configure the screen of the display 122. Here, one line of pixels arranged horizontally is referred to as a horizontal pixel line 122a. The display 122 may be represented by a set vertically arranged with a plurality of horizontal pixel lines 122a.

The display driver 121 includes a gate that controls a voltage applied to pixels. More specifically, the display driver 121 includes a plurality of gates that may control a voltage applied to the plurality of horizontal pixel lines 122a (FIGS. 4A-4B). One gate may control a voltage applied to one horizontal pixel line. When a voltage is applied to a pixel, the pixel outputs an image by image data corresponding to the pixel. According to a scan rate of the display 122, a voltage is sequentially applied to the plurality of horizontal pixel lines 122a to output an image. The display driver 121 may control a plurality of gates based on the screen control signal, so that a voltage is applied to horizontal pixel lines belonging to a specific region of the display 122 to output an image.

FIG. 4A illustrates that an image is output in an entire region R1 of the display 122, and FIG. 4B illustrates that an image is output in a partial region R2 and no image is output in the remaining region R3. In FIG. 4B, since a voltage is not applied to horizontal pixel lines included in the region R3, no image is output.

In FIGS. 4A AND 4B, assuming that the display 122 consists of a set of N horizontal pixel lines, FIG. 4A illustrates that an image is output, for example, on the first to n-th horizontal pixel lines (i.e., the entire horizontal pixel lines included in the region R1), among the first, second, third,..., n-th horizontal pixel lines. FIG. 4B illustrates that an image is output, for example, on first to n/2-th horizontal pixel lines (i.e., horizontal pixel lines included in the region R2) and no image is output on (n/2+1)-th to n-th horizontal pixel lines (i.e., horizontal pixel lines included in the region R3).

Whether an image will be output in an arbitrary section of horizontal pixel lines among total horizontal pixel lines may depend on the withdrawal mode of the display unit 120. Depending on the withdrawal mode, a region by which the display unit 120 is exposed to the outside of the casing 110 differs. The display device 100 may output an image on horizontal pixel lines contained in the region by which the display 100 is exposed to the outside of the casing 110.

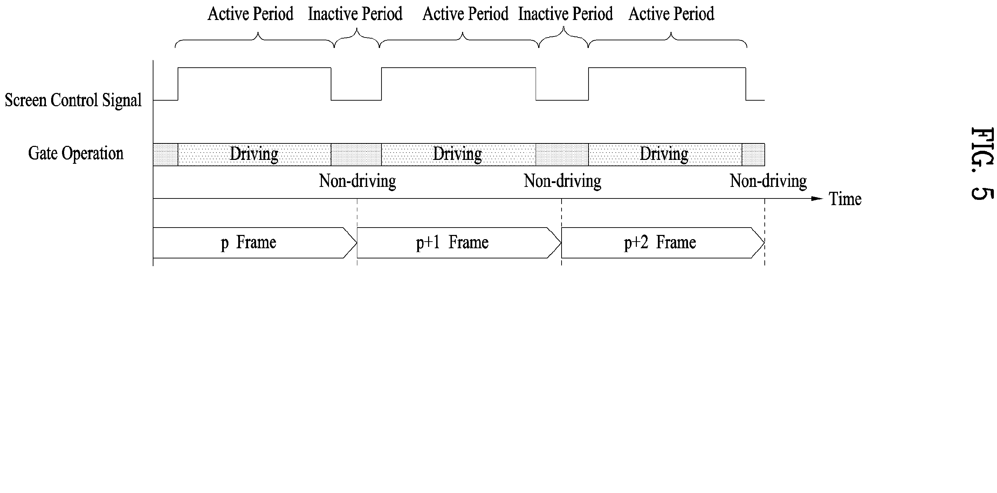

FIGS. 5, 6A-6C and 7 illustrate exemplary screen control signals according to an embodiment. A screen control signal according to the embodiment may be generated by the controller 140 and transmitted to the display driver 121. The display driver 121 may control image output on a plurality of horizontal pixel lines based on the screen control signal.

Referring to FIGS. 5 to 7, the screen control signal includes an active period and an inactive period. The screen control signal repeats the active period and the inactive period over time. In the active period of the screen control signal, a gate applies a voltage to a pixel, and in the inactive period of the screen control signal, the gate does not apply the voltage to the pixel. Multiple gates corresponding to respective horizontal pixel lines are sequentially driven based on a scan rate of the display. In this case, whether to apply a voltage may be determined depending on whether the screen control signal is activated or not.

FIG. 5 illustrates a screen control signal when an image is output on the entire screen of the display 122. In the active period of the screen control signal, a voltage is sequentially applied to the first to n-th horizontal pixel lines of the display 122, so that an image of one frame (e.g., a frame p) is output. After the inactive period for a predetermined time elapses, the active period is started again, and an image of the next frame (e.g., frame p+1) is output on the first to n-th horizontal pixel lines.

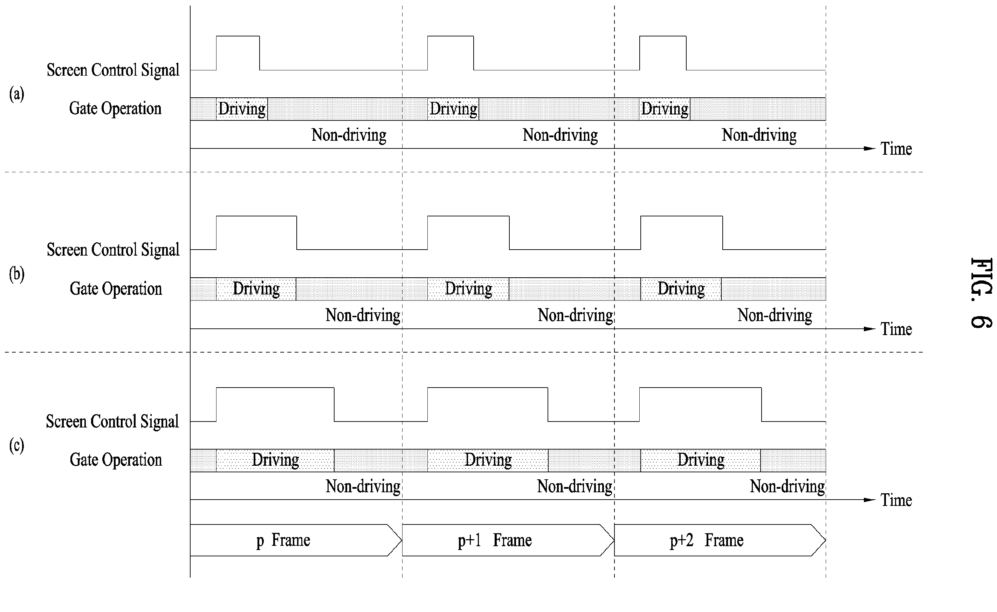

FIGS. 6A-6C illustrate screen control signals when an image is output on a partial screen of the display 122. FIGS. 6A, 6B, 6C illustrate different durations of active periods of the screen control signals. In FIG. 6A, the duration of the active period is smallest, and in FIG. 6C, the duration of the active period is longest. Accordingly, in FIG. 6A, since the number of horizontal pixel lines to which a voltage is applied during the duration of the active period is smallest, the image is output in a small region. In FIG. 6C, since the number of horizontal pixel lines to which a voltage is applied during the duration of the active period is large, the image is output in a large region.

In this way, if a starting point of the active period and the duration of the active period vary, horizontal pixel lines on which an image is output (or to which a voltage is applied) in the display 122 differ, a region of the screen in which the image is output may vary.

The controller 140 may transmit the screen control signal to the display unit 120 according to the mode, and the display unit 120 may output an image based on the screen control signal which differs according to each mode. The starting point and duration of the active period of the screen control signal may vary depending on the mode. Therefore, the size and position of a region in which an image is output in the display unit may differ according to the mode.

The starting point of the active period may be based on a synchronization signal. The synchronization signal may be included in image data received by the controller 140 or may be a separate signal. The synchronization signal may be a signal indicating that image data received by the controller 140 is the first image data or the last image data of image data corresponding to one frame. Alternatively, the synchronization signal may be a signal representing image data corresponding to a specific pixel among the image data corresponding to one frame. In this case, the specific pixel may be the first pixel or the last pixel of the display 122. The first pixel may indicate a pixel that outputs the first image data among the image data corresponding to one frame in the display 122. The last pixel may indicate a pixel that outputs the last image data among the image data corresponding to one frame in the display 122. In other words, the synchronization signal may be a signal indicating the order of image data.

The controller 140 may activate the screen control signal based on the synchronization signal. For example, the controller 140 may activate the screen control signal upon receiving the synchronization signal indicating the first image data and deactivate the screen control signal upon receiving the synchronization signal indicating the last image data.

Alternatively, the controller 140 may activate the screen control signal upon receiving the synchronization signal indicating the first image data and deactivate the screen control signal after a certain time (duration of the active period) elapses. In this case, the duration of the active period may indicate the time required to receive all the image data corresponding to one frame. Alternatively, the duration of the active period may represent the time consumed from the time when the first image data among the image data corresponding to one frame is output to the time when the last image data among the image data corresponding to one frame is output.

Alternatively, the duration of the active period may be calculated based on the scan rate of the display 122. For example, if the scan rate of the display 122 is 60 Hz, the output cycle of an image frame is 1/60 seconds. In other words, the sum of the duration of the active period and the duration of the inactive period within one cycle is 1/60 seconds. Here, assuming that all horizontal pixel lines of the display 122 will sequentially operate, a time obtained by subtracting the duration of the inactive period (which may be randomly set) from 1/60 seconds becomes the duration (referred to hereinafter as 'A time') of the active period during which an image is output in the entire region. A time (referred to hereinafter as 'B time') consumed to output an image on one horizontal pixel line may be calculated by dividing the A time by the number of horizontal pixel lines. Therefore, the duration of the active period for outputting an image on horizontal pixel lines belonging to a specific region of the display 122 may be calculated by multiplying the number of horizontal pixel lines included in the specific region by the B time.

In addition, the starting point of the active period may be calculated based on the scan rate of the display 122. Since a volage is cyclically applied to the first horizontal pixel line of the display 122 according to the scan rate, the screen control signal may be activated identically to the cycle.

In the embodiment, while the scan rate has been exemplified as 60 Hz, the starting point and duration of the active period of the screen control signal may be configured according to the above description with respect to various scan rates such as 120 Hz and 144 Hz.

In the display device 100 according to the embodiment, since the area of a region of the display 122 exposed to the outside of the casing 110 differs according to the mode, the number of the horizontal pixel lines included in the exposed region differs according to the mode. Therefore, the duration of the active period according to each mode may be calculated by multiplying the number of horizontal pixel lines included in the exposed region according to the mode by the B time. Thus, the duration of the active period is different for each withdrawal mode of the display unit 120, and all or part of a plurality of horizontal pixel lines may be activated according to the mode.

(a), (b) and (c) of FIG. 6 represent screen control signals in different modes, respectively. The screen control signal has a different ratio of the duration of the active period and the duration of the inactive period in one cycle according to the mode. According to the mode, the duration of the inactive period may be longer than the duration of the active period. Desirably, the duration of the inactive period is less than eight times the duration of the active period. Similarly, the number of horizontal pixel lines deactivated may be larger than the number of horizontal pixel lines activated according to the mode. Desirably, the number of horizontal pixel lines deactivated is less than eight times the number of horizontal pixel lines activated.

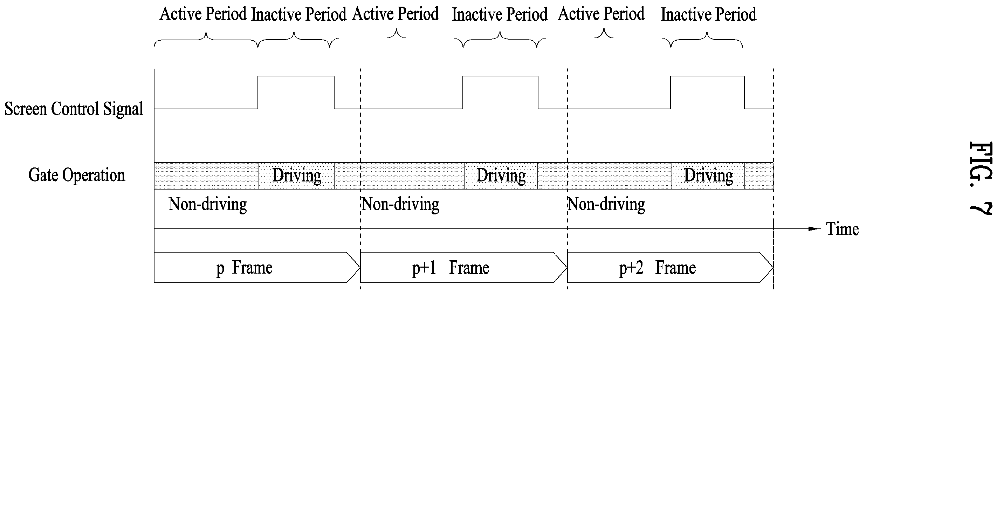

FIG. 7 illustrates a screen control signal of another embodiment. According to the screen control signal of FIG. 7, horizontal pixel lines included in a lower region of the display 122 may be activated. That is, image data may be output in a lower direction from horizontal pixel lines located at the middle height of the display 122. The screen control signal as in FIG. 7 may be used when image data is shown to the user only in a lower region of the display unit 120 after the display unit 120 of a foldable type is folded.

Hereinafter, a control method of a display device according to an embodiment will be described. The control method according to the embodiment includes receiving a mode signal of a user by a controller of the display device, transmitting a movement control signal corresponding to the mode signal to a display mover by the controller, and transmitting a screen control signal corresponding to the mode signal to a display unit by the controller.

In this case, the screen control signal includes an active period and an inactive period. The active period or the inactive period is based on a synchronization signal indicating the order of image data. The screen control signal has been described above.

In addition, the control method according to the embodiment further includes moving the display unit based on the movement control signal by the display mover. The operation of moving the display unit includes determining a position of the display unit based on a value measured by a sensor, driving a motor based on the movement control signal, and determining whether the display unit is moved according to the movement control signal based on the value measured by the sensor.

According to embodiments of the present disclosure, since the withdrawal range of the display may be efficiently controlled according to the use of the display screen, the availability of the display device is improved. In addition, since only a display region of a withdrawal range may be output, screen display power is saved. In addition, an image may be output only on pixels of an exposed display region by a simple method. Power is reduced compared to power when a display region which is not exposed is processed in black.

The description of various embodiments of the present disclosure is not limited to the corresponding embodiment.

As described above, the detailed description of the embodiments of the present disclosure has been given to enable those skilled in the art to implement and practice the disclosure. Although the disclosure has been described with reference to the embodiments, those skilled in the art will appreciate that various modifications and variations may be made within the scope defined the appended claims. For example, those skilled in the art may use constructions disclosed in the above-described embodiments in combination with each other within the scope defined the appended claims.

Accordingly, the present disclosure should not be limited to the specific embodiments described herein, but should be accorded the broadest scope defined by the appended claims.

## Claims

1. A display device (100), comprising:
a casing (110) having an opening;
a display unit (120) configured to be inserted into and withdrawn from the casing (110) through the opening;
a display mover (130) connected to the display unit (120) and configured to move the display unit (120); and
a controller (140) configured to transfer a movement control signal to the display mover (130) and the display unit (120),
wherein the display unit (120) moves according to a mode so that an area exposed to an outside of the casing (110) differs according to the mode,
**characterized in that**:
the display mover (130) includes a sensor configured to measure a value of a distance between the display unit (120) and an inner wall of the casing (110),
wherein the controller (140) is configured to determine a position of the display unit (120) based on the value measured by the sensor and to determine whether the display unit (120) is moved according to the movement control signal based on the distance measured by the sensor,
wherein the sensor is connected to a rear surface of the display unit (120) and configured to measure a distance to the inner wall of the casing (110) in a direction perpendicular to a movement direction of the display unit (120), the inner wall of the casing (110) being provided with a shape that gradually changes the distance according to movement of the display unit (120), or
wherein the sensor is located at the inner wall of the casing (110) and configured to measure a distance to a rear surface of the display unit (120), the rear surface of the display unit (120) being provided with a shape that gradually changes the distance according to movement of the display unit (120).

2. The display device (100) of claim 1, wherein:
the display unit (120) includes a display driver (121) configured to control a plurality of horizontal pixel lines (122a) included in a display (122),
the controller (140) transfers a screen control signal to the display driver (121), and
the display driver (121) controls image output of the horizontal pixel lines (122a) based on the screen control signal.

3. The display device (100) of claim 2, wherein:
the screen control signal includes an active period and an inactive period,
the display driver (121) applies a voltage to a horizontal pixel line based on the screen control signal of an active state, and
a starting point and a duration of the active period differ according to the mode.

4. The display device (100) of claim 3, wherein:
the active period or the inactive period of the screen control signal is based on a synchronization signal, and
the synchronization signal is a signal indicating an order of image data.

5. The display device (100) of claim 4, wherein the active period of the screen control signal is started based on the synchronization signal.

6. The display device (100) of claim 4 or 5, wherein the duration of the active period of the screen control signal differs based on the mode and is calculated based on a scan rate.

7. The display device (100) of any one of claims 3 to 6, wherein:
the active period and the inactive period of the screen control signal are repeated over time,
the active period is calculated based on a scan rate, n, represented in Hertz, and
the screen control signal has a different ratio of the duration of the active period to a duration of the inactive period in one cycle according to the mode.

8. A method of controlling a display device (100) of claim 1, the method comprising:
receiving by the controller (140), a mode signal of a user;
transmitting, by the controller (140), a movement control signal corresponding to the mode signal to the display mover (130);
transmitting, by the controller (140), a screen control signal corresponding to the mode signal to the display unit (120), and
moving the display unit (120) based on the movement control signal by the display mover (130),
**characterized in that** the moving the display unit (120) comprises:
determining a position of the display unit (120) based on a value of a distance between the display unit (120) and the inner wall of the casing (110) measured by the sensor,
driving a motor of the display device based on the movement control signal, and
determining whether the display unit (120) is moved according to the movement control signal based on the distance measured by the sensor,
wherein the sensor is connected to a rear surface of the display unit (120) and configured to measure a distance to the inner wall of the casing (110) in a direction perpendicular to a movement direction of the display unit (120), the inner wall of the casing (110) being provided with a shape that gradually changes the distance according to movement of the display unit (120), or
wherein the sensor is located at the inner wall of the casing (110) and configured to measure a distance to a rear surface of the display unit (120), the rear surface of the display unit (120) being provided with a shape that gradually changes the distance according to movement of the display unit (120).

9. The method of claim 8, wherein the screen control signal includes an active period and an inactive period, and the active period or the inactive period are based on a synchronization signal indicating an order of image data.

## Patentansprüche

1. Anzeigevorrichtung (100), umfassend:
ein Gehäuse (110) mit einer Öffnung;
eine Anzeigeeinheit (120), die dazu eingerichtet ist, durch die Öffnung in das Gehäuse (110) eingeführt und aus diesem herausgezogen zu werden;
eine Anzeigebewegungseinrichtung (130), die mit der Anzeigeeinheit (120) verbunden und dazu eingerichtet ist, die Anzeigeeinheit (120) zu bewegen; und
eine Steuerung (140), die dazu eingerichtet ist, ein Bewegungssteuersignal an die Anzeigebewegungseinrichtung (130) und die Anzeigeeinheit (120) zu übertragen,
wobei sich die Anzeigeeinheit (120) gemäß einem Modus bewegt, sodass sich ein außerhalb des Gehäuses (110) freiliegender Bereich je nach Modus unterscheidet, **dadurch gekennzeichnet, dass**:
die Anzeigebewegungseinrichtung (130) einen Sensor umfasst, der dazu eingerichtet ist, einen Wert eines Abstands zwischen der Anzeigeeinheit (120) und einer Innenwand des Gehäuses (110) zu messen,
wobei die Steuerung (140) dazu eingerichtet ist, eine Position der Anzeigeeinheit (120) auf Grundlage des von dem Sensor gemessenen Werts zu bestimmen und auf Grundlage des von dem Sensor gemessenen Abstands zu bestimmen, ob die Anzeigeeinheit (120) gemäß dem Bewegungssteuersignal bewegt wird,
wobei der Sensor mit einer Rückfläche der Anzeigeeinheit (120) verbunden und dazu eingerichtet ist, in einer zu einer Bewegungsrichtung der Anzeigeeinheit (120) senkrechten Richtung einen Abstand zu der Innenwand des Gehäuses (110) zu messen, wobei die Innenwand des Gehäuses (110) mit einer Form versehen ist, die den Abstand entsprechend einer Bewegung der Anzeigeeinheit (120) allmählich verändert, oder
wobei der Sensor an der Innenwand des Gehäuses (110) angeordnet und dazu eingerichtet ist, einen Abstand zu einer Rückfläche der Anzeigeeinheit (120) zu messen, wobei die Rückfläche der Anzeigeeinheit (120) mit einer Form versehen ist, die den Abstand entsprechend einer Bewegung der Anzeigeeinheit (120) allmählich verändert.

2. Anzeigevorrichtung (100) nach Anspruch 1, wobei:
die Anzeigeeinheit (120) einen Anzeigetreiber (121) umfasst, der dazu eingerichtet ist, eine Mehrzahl horizontaler Pixelzeilen (122a), die in einer Anzeige (122) enthalten sind, zu steuern,
die Steuerung (140) ein Bildschirmsteuersignal an den Anzeigetreiber (121) überträgt, und
der Anzeigetreiber (121) eine Bildausgabe der horizontalen Pixelzeilen (122a) auf Grundlage des Bildschirmsteuersignals steuert.

3. Anzeigevorrichtung (100) nach Anspruch 2, wobei:
das Bildschirmsteuersignal eine aktive Periode und eine inaktive Periode umfasst,
der Anzeigetreiber (121) auf Grundlage des Bildschirmsteuersignals in einem aktiven Zustand eine Spannung an eine horizontale Pixelzeile anlegt, und
ein Startzeitpunkt und eine Dauer der aktiven Periode je nach Modus unterschiedlich sind.

4. Anzeigevorrichtung (100) nach Anspruch 3, wobei:
die aktive Periode oder die inaktive Periode des Bildschirmsteuersignals auf einem Synchronisationssignal basiert, und
das Synchronisationssignal ein Signal ist, das eine Reihenfolge von Bilddaten angibt.

5. Anzeigevorrichtung (100) nach Anspruch 4, wobei die aktive Periode des Bildschirmsteuersignals auf Grundlage des Synchronisationssignals gestartet wird.

6. Anzeigevorrichtung (100) nach Anspruch 4 oder 5, wobei die Dauer der aktiven Periode des Bildschirmsteuersignals je nach Modus unterschiedlich ist und auf Grundlage einer Abtastrate berechnet wird.

7. Anzeigevorrichtung (100) nach einem der Ansprüche 3 bis 6, wobei:
die aktive Periode und die inaktive Periode des Bildschirmsteuersignals im Zeitverlauf wiederholt werden,
die aktive Periode auf Grundlage einer in Hertz angegebenen Abtastrate n berechnet wird, und
das Bildschirmsteuersignal je nach Modus in einem Zyklus ein unterschiedliches Verhältnis der Dauer der aktiven Periode zu einer Dauer der inaktiven Periode aufweist.

8. Verfahren zum Steuern einer Anzeigevorrichtung (100) nach Anspruch 1, wobei das Verfahren umfasst:
Empfangen eines Modussignals eines Benutzers durch die Steuerung (140);
Übertragen eines dem Modussignal entsprechenden Bewegungssteuersignals durch die Steuerung (140) an die Anzeigebewegungseinrichtung (130);
Übertragen eines dem Modussignal entsprechenden Bildschirmsteuersignals durch die Steuerung (140) an die Anzeigeeinheit (120) und
Bewegen der Anzeigeeinheit (120) durch die Anzeigebewegungseinrichtung (130) auf Grundlage des Bewegungssteuersignals,
**dadurch gekennzeichnet, dass** das Bewegen der Anzeigeeinheit (120) umfasst:
Bestimmen einer Position der Anzeigeeinheit (120) auf Grundlage eines von dem Sensor gemessenen Werts eines Abstands zwischen der Anzeigeeinheit (120) und der Innenwand des Gehäuses (110),
Antreiben eines Motors der Anzeigevorrichtung auf Grundlage des Bewegungssteuersignals, und
Bestimmen, ob die Anzeigeeinheit (120) gemäß dem Bewegungssteuersignal bewegt wird, auf Grundlage des von dem Sensor gemessenen Abstands,
wobei der Sensor mit einer Rückfläche der Anzeigeeinheit (120) verbunden und dazu eingerichtet ist, in einer zu einer Bewegungsrichtung der Anzeigeeinheit (120) senkrechten Richtung einen Abstand zu der Innenwand des Gehäuses (110) zu messen, wobei die Innenwand des Gehäuses (110) mit einer Form versehen ist, die den Abstand entsprechend einer Bewegung der Anzeigeeinheit (120) allmählich verändert, oder
wobei der Sensor an der Innenwand des Gehäuses (110) angeordnet und dazu eingerichtet ist, einen Abstand zu einer Rückfläche der Anzeigeeinheit (120) zu messen, wobei die Rückfläche der Anzeigeeinheit (120) mit einer Form versehen ist, die den Abstand entsprechend einer Bewegung der Anzeigeeinheit (120) allmählich verändert.

9. Verfahren nach Anspruch 8, wobei das Bildschirmsteuersignal eine aktive Periode und eine inaktive Periode umfasst und die aktive Periode oder die inaktive Periode auf einem Synchronisationssignal basiert, das eine Reihenfolge von Bilddaten angibt.

## Revendications

1. Dispositif d'affichage (100) comprenant:
un boîtier (110) comportant une ouverture;
une unité d'affichage (120) conçue pour s'insérer dans le boîtier (110) et en être retirée par l'ouverture;
un dispositif de déplacement d'écran (130) relié à l'unité d'affichage (120) et conçu pour déplacer l'unité d'affichage (120); et
un organe de commande (140) configuré pour transférer le signal de commande de déplacement au dispositif de déplacement d'écran (130) et à l'unité d'affichage (120),
dans lequel l'unité d'affichage (120) se déplace selon un mode permettant que la zone visible depuis l'extérieur du boîtier (110) varie en fonction du mode,
**caractérisé en ce que** :
le dispositif de déplacement d'écran (130) comprend un capteur configuré pour mesurer une valeur de la distance entre l'unité d'affichage (120) et une paroi intérieure du boîtier (110),
dans lequel l'organe de commande (140) est configuré pour déterminer la position de l'unité d'affichage (120) en fonction de la valeur mesurée par le capteur et pour déterminer si l'unité d'affichage (120) est déplacée conformément au signal de commande de mouvement, en fonction de la distance mesurée par le capteur,
dans lequel le capteur est connecté à une surface arrière de l'unité d'affichage (120) et est configuré pour mesurer une distance par rapport à la paroi intérieure du boîtier (110) dans une direction perpendiculaire à la direction de déplacement de l'unité d'affichage (120), la paroi intérieure du boîtier (110) se présentant sous une forme qui fait varier progressivement la distance en fonction du déplacement de l'unité d'affichage (120), ou
dans lequel le capteur est situé dans la paroi intérieure du boitier (110) et est configuré pour mesurer une distance par rapport à l'unité d'affichage (120), la surface arrière de l'unité d'affichage (120) se présentant sous une forme qui fait varier progressivement la distance en fonction du déplacement de l'unité d'affichage (120).

2. Dispositif d'affichage (100) selon la revendication 1, dans lequel:
l'unité d'affichage (120) comprend un circuit d'attaque d'affichage (121) configuré pour commander une pluralité de lignes de pixels horizontales (122a) comprises dans un écran (122),
l'organe de commande (140) transmet un signal de commande d'écran au circuit d'attaque d'affichage (121), et
le circuit d'attaque d'affichage (121) commande la sortie d'image des lignes de pixels horizontales (122a) en fonction du signal de commande d'écran.

3. Dispositif d'affichage (100) selon la revendication 2, dans lequel:
le signal de commande d'écran comprend une période active et une période inactive,
le circuit d'attaque d'affichage (121) applique une tension sur une ligne de pixels horizontale en fonction du signal de commande d'écran qui est actif, et
un point de départ et une durée de la période active sont différents selon le mode.

4. Dispositif d'affichage (100) selon la revendication 3, dans lequel:
la période active ou la période inactive du signal de commande d'écran se base sur un signal de synchronisation, et
le signal de synchronisation est un signal qui indique l'ordre des données d'image.

5. Dispositif d'affichage (100) selon la revendication 4, dans lequel la période active du signal de commande d'écran démarre en fonction du signal de synchronisation.

6. Dispositif d'affichage (100) selon la revendication 4 ou 5, dans lequel la durée de la période active du signal de commande d'écran est différente en fonction du mode et est calculée sur la base d'une fréquence de balayage.

7. Dispositif d'affichage (100) selon l'une quelconque des revendications 3 à 6, dans lequel:
la période active et la période inactive du signal de commande d'écran se répètent au fil du temps,
la durée active est calculée à partir d'une fréquence de balayage, n, exprimée en hertz, et
le signal de commande d'écran présente, au courant d'un cycle, un rapport différent entre la durée de la période active et celle de la période inactive, en fonction du mode.

8. Procédé de commande d'un dispositif d'affichage (100) selon la revendication 1, le procédé comprenant:
la réception, par l'organe de commande (140), d'un signal de mode d'un utilisateur;
la transmission, par l'organe de commande (140), d'un signal de commande de mouvement correspondant au signal de mode au dispositif de déplacement d'écran (130);
la transmission, par l'organe de commande (140), d'un signal de commande d'écran correspondant au signal de mode au dispositif d'affichage (120), et
le déplacement de l'unité d'affichage (120) par le dispositif de déplacement d'écran (130), en fonction du signalisation de commande de mouvement,
**caractérisé en ce que** le déplacement de l'unité d'affichage (120) comprend:
la détermination d'une position de l'unité d'affichage (120) sur la base d'une valeur de la distance entre l'unité d'affichage (120) et la paroi interne du boîtier (110) mesurée par le capteur,
l'entraînement d'un moteur du dispositif d'affichage en fonction du signal de commande de mouvement, et
la détermination visant à savoir si l'unité d'affichage (120) est déplacée conformément au signal de commande de mouvement sur la base de la distance mesurée par le capteur,
dans lequel le capteur est connecté à une surface arrière de l'unité d'affichage (120) et est configuré pour mesurer une distance par rapport à la paroi intérieure du boîtier (110) dans une direction perpendiculaire à la direction de déplacement de l'unité d'affichage (120), la paroi intérieure du boîtier (110) se présentant sous une forme qui fait varier progressivement la distance en fonction du déplacement de l'unité d'affichage (120), ou
dans lequel le capteur est situé dans la paroi intérieure du boitier (110) et est configuré pour mesurer une distance par rapport à l'unité d'affichage (120), la surface arrière de l'unité d'affichage (120) se présentant sous une forme qui fait varier progressivement la distance en fonction du déplacement de l'unité d'affichage (120).

9. Procédé selon la revendication 8, dans lequel le signal de commande d'écran comprend une période active et une période inactive, et la période active et une période inactive se basent sur un signal de synchronisation qui indique l'ordre des données d'image.
